# FASCICULE DE BREVET EUROPEEN

(11) **EP 2 159 455 B1**
(45) Date de publication et mention de la délivrance du brevet: **29.02.2012**
(21) Numéro de dépôt: 09305749.5
(22) Date de dépôt: 12.08.2009
(51) Int. Cl.: F16H 59/08, F16H 61/24, G01D 5/14, G05G 1/08, G05G 5/03, G05G 5/06

(54) **Dispositif de commande d'une boîte de vitesses de véhicule automobile assujettie à un calculateur**
Steuervorrichtung eines computergesteuerten Kraftfahrzeuggetriebes
Device for controlling a computer-controlled gearbox of an automobile.

(30) Priorité: 28.08.2008 FR 0855783
(43) Date de publication de la demande: 03.03.2010
(73) Titulaire: Dura Automotive Systems SAS, 91570 Bièvres (FR)
(72) Inventeur: Farges, Thomas, 77350 Le Mee sur Seine (FR)
(74) Mandataire: Thivillier, Patrick

(56) Documents cités:
- EP-A- 1 229 272
- EP-A- 1 770 311
- EP-A- 1 895 198
- WO-A-2007/076814
- FR-A- 2 804 240
- FR-A- 2 836 974
- US-A1- 2006 037 424

## Description

L'invention se rattache au secteur technique des moyens de commande des boîtes de vitesses, notamment pour véhicules automobiles, et concerne plus particulièrement une boîte automatique pilotée.

Ce type de boîte, parfaitement connu pour un homme du métier, est assujetti à différents moyens du type calculateur, actionneur, unité de contrôle électronique, .... pour passer, à volonté, d'un mode manuel à un mode automatique. Dans un mode manuel, on parle des positions M+ et M-(commande séquentielle) pour monter et descendre les vitesses en agissant sur un organe de manoeuvre. Dans un mode automatique, on parle de positions P - R - N - D pour l'engagement et la sélection, à partir de l'organe de commande précité, desdites positions P (frein de parking), R (marche arrière), N (point mort), D (conduite normale avec la totalité des rapports). La commande de ces boîtes pilotées s'effectue, le plus souvent, soit par un levier seul, soit par les palettes seules associées au volant, soit pour la combinaison d'un levier et des palettes.

On a proposé également d'assurer cette commande au moyen d'un organe rotatif sous forme d'un bouton, comme il ressort, par exemple, de l'enseignement des documents EP 1.768.009 et WO 2007/076814.

Toutefois, ce type de commande, au moyen d'un bouton rotatif, nécessite des moyens spécifiques, d'une part, pour l'indexation angulaire du bouton dans différentes positions correspondant au mode sélectionné et à l'état sélectionné et, d'autre part, des moyens permettant de connaître le positionnement de l'organe.

On connait également le document EP 1 229 272 qui divulgue un dispositif conformément au préambule de la revendication 1.

A partir de cet état de la technique, c'est-à-dire d'une commande de boîte de vitesses au moyen d'un bouton rotatif, le problème que se propose de résoudre l'invention est de pouvoir, à partir de ce bouton, sélectionner les modes P - R - N - D et M, non pas sur les états stables de ce bouton, comme il ressort de l'état de la technique, mais sur les déplacements entre les états stables de ce bouton.

Pour résoudre un tel problème, il a été conçu et mis au point un dispositif conforme aux caractéristiques définies dans la deuxième partie de la revendication 1.

Selon d'autres caractéristiques, les moyens de type magnétique sont constitués par une série d'aimants dont les pôles Nord et les pôles Sud sont disposés en alternance sur la partie correspondante du bouton et du support.

La partie du bouton est constituée par une couronne interne, tandis que la partie du support est constituée par une couronne externe, lesdites couronnes étant disposées d'une manière concentrique. Les aimants sont répartis sur la périphérie des couronnes.

Un autre problème que se propose de résoudre l'invention est de pouvoir détecter le passage des pôles Sud et des pôles Nord, afin de déterminer le nombre de pas effectués ainsi que le sens de rotation du bouton de commande.

Pour résoudre un tel problème, le bouton est assujetti à 2 capteurs pour détecter le changement de position stable et indiquer le sens de rotation. Les capteurs sont constitués par deux capteurs à effet Hall montés à proximité des aimants de la partie tournante du bouton.

Selon l'invention, le bouton est asservi, via des bus de commande et de puissance, à :
- un calculateur de pilotage et d'acquisition des données en provenance de la boîte de vitesses;
- un calculateur de gestion de la boîte de vitesses pour la sélection et la gestion des modes P - R - N - D ou M en combinaison avec un actionneur ;
- un moyen d'indication visuel des différents modes sous forme de LED.

Les signaux effet Hall du bouton sont transmis à un microcontrôleur qui envoie un signal à chacune des LED correspondant aux différents modes et aux différentes positions dans les modes sélectionnés, ledit microcontrôleur étant aussi assujetti à l'élément faisant office de contacteur. Le microcontrôleur notifie au calculateur de pilotage des modes P - R - N - D de la position souhaitée par le conducteur.

L'invention est exposée ci-après plus en détail à l'aide des figures des dessins annexés dans lesquels :

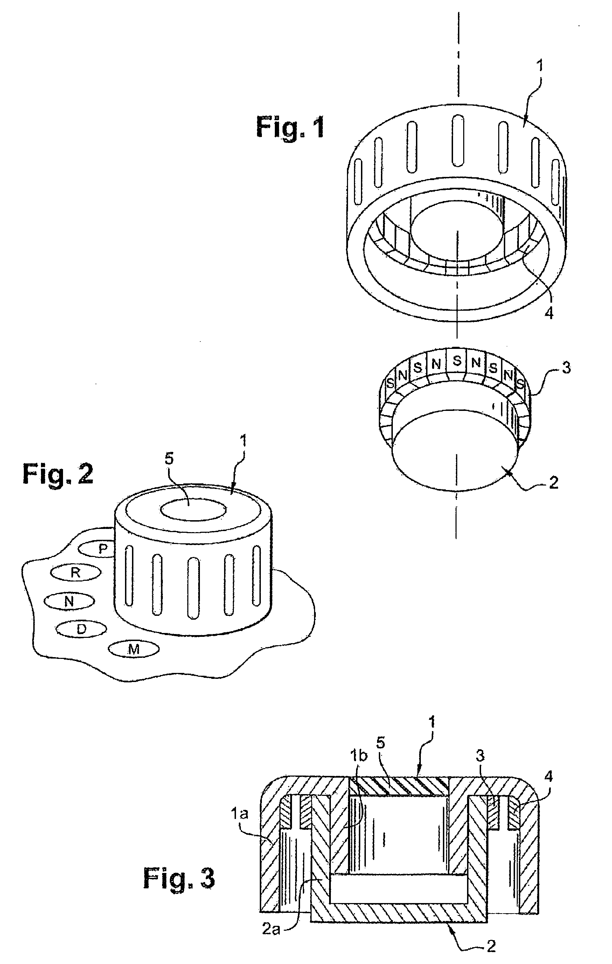

- la figure 1 est une vue en perspective à caractère schématique du bouton rotatif orienté angulairement pour la commande des modes P - R - N - D et M de la boîte de vitesses, avec l'indication des différentes positions P - R - N - D et M par des LED ;
- la figure 2 est une vue en perspective avant montage des éléments constitutifs du bouton ;
- la figure 3 est une vue en coupe longitudinale du bouton ;
- la figure 4 montre un exemple d'architecture pour l'analyse fonctionnelle du bouton avec les principaux éléments nécessaires à la commande de la boîte de vitesses ;
- la figure 5 est un exemple d'architecture de la commande rotative ;
- la figure 6 est une décomposition fonctionnelle du bouton rotatif.
- la figure 7 est un chronogramme de signaux des capteurs à effet Hall pour un mouvement d'une position stable 1 à une position stable 2.

Selon une caractéristique à la base de l'invention , le bouton (1) et le support (2) sont assujettis à des moyens de type magnétique, aptes à exercer une force d'attraction, créant l'effet de billage (avalement puis butée) recherché en faisant office de crans, et correspondant à une position d'indexation angulaire stable. L'effet de butée est annulé lorsqu'un effort est exercé sur le bouton (1). Dans ce but, une partie bouton (1) et une partie du support (2) sont équipés d'aimants permanents (3) et (4) dont les pôles Nord et les pôles Sud sont disposés en alternance afin de réaliser la position stable lorsque le pôle Sud d'un aimant est positionné devant le pôle Nord d'un autre aimant.

Par exemple, comme le montrent les figures des dessins, le bouton (1) délimite une couronne (1a) dont la face interne est équipée des aimants (4) répartis sur sa circonférence et décalés angulairement. D'une manière correspondante, le support fixe (2) présente une couronne (2a) dont la face externe est équipée des aimants (3). A titre indicatif, le montage tournant du bouton (1) par rapport au support (2) s'effectue par une portée coaxiale de centrage (1b) engagée à l'intérieur de la couronne (2a) du support (2). Les couronnes (1a) et (2a), respectivement avec l'alternance des aimants (4) et (3), sont donc disposées d'une manière concentrique, les aimants étant répartis sur la périphérie des couronnes. Bien évidemment, le nombre d'aimants (3) et (4) est fonction du nombre de crans souhaités.

La fixation des différents aimants sur les couronnes s'effectue par tout moyen connu et approprié.

Compte tenu de ces dispositions, en tournant le bouton (1), le pôle Sud de l'un des aimants (4) de la couronne (1a) passe devant le pôle Sud de l'un des aimants (3) de la couronne (2a) du support (2) selon un mouvement qui nécessite un effort. Lorsque le pôle Sud passe devant le pôle Nord, les deux aimants se positionnent l'un devant l'autre correspondant à une position stable à partir de laquelle, il est nécessaire de vaincre un effort pour passer à une autre position décalée angulairement.

Il résulte de ces caractéristiques que le bouton n'est pas orienté angulairement, mais peut être entraîné, de manière continue, selon 360° dans un sens ou dans l'autre, avec pour objectif de sélectionner les modes P - R - N - D et M non pas sur les états stables de ce bouton, mais sur les déplacements entre les états stables de ce bouton.

Ces différents déplacements sont donnés par des indications lumineuses sous forme de LED notamment correspondant, par exemple, aux différentes lettres P - R - N - D et M

Les indications correspondent, soit à la volonté du conducteur, soit a la position de la boîte

Le bouton est asservi à un élément (5) faisant office de contacteur pour autoriser le passage d'un mode à l'autre.

Si le contacteur n'est pas activé, le bouton peut tourner mais ne génère pas de changement de mode, donc pas de changement d'indication lumineuse.

Il apparaît donc, selon l'invention, que le bouton rotatif (1) permet de sélectionner les modes P - R - N - D et M sur une boîte de vitesses automatique, tout en étant capable de les afficher et de les sélectionner via les différentes LED qui correspondent aux positions P - R - N - D et M. Ainsi, lorsque la boîte est en mode séquentiel M, la rotation du bouton (1), selon le sens horaire, commande la vitesse supérieure, tandis qu'une rotation inverse dudit bouton (1) commande la vitesse inférieure. Pour quitter le mode séquentiel et sélectionner le mode automatique, il convient d'appuyer sur le contacteur (5), puis de tourner le bouton (1) en sens inverse des aiguilles d'une montre.

Le bouton permet alors de nouveau de sélectionner les modes P - R - N - D ou M.

Comme le montrent les figures des dessins, le contacteur (5) peut être constitué par un poussoir disposé coaxialement au bouton rotatif (1) en constituant le support fixe de ce dernier.

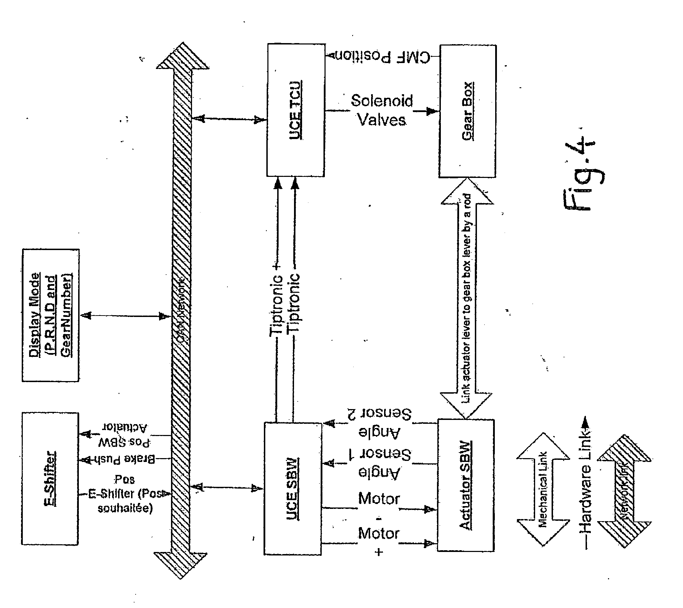

On renvoie à la figure 4 qui montre, à titre indicatif nullement limitatif, l'architecture possible pour l'utilisation du bouton de commande et de sélection des vitesses.
- Une action sur le bouton rotatif (1), envoie un ordre de commande du mode P - R - N - D et M souhaité par le conducteur. L'information de la position de la boîte de vitesses automatique est récupérée pour afficher, par l'intermédiaire des LED, la position de cette boîte.
- Un calculateur UCE SBW d'acquisition de la demande est assujetti au bouton de commande (1) via un bus CAN qui pilote un actionneur SBW suivant l'état du véhicule (sa vitesse par exemple).
- L'actionneur SBW permet de positionner le sélecteur de la boîte de vitesses automatique dans un mode P - R - N et D par l'intermédiaire d'une liaison mécanique et électrique.
- Le calculateur UCE TCU de gestion de boîte de vitesses automatique, est conformé pour acquérir les signaux tiptronic permettant de sélectionner le mode manuel ou le mode automatique et de gérer le mode séquentiel M+ et M-.

Selon une autre caractéristique, le bouton rotatif (1) est assujetti à des capteurs pour détecter chaque position stable et indiquer le sens de rotation. Avantageusement, les capteurs sont constitués par deux capteurs à effet Hall montés à proximité des aimants (4) de la partie tournante (1), à savoir de la couronne interne de ce dernier.

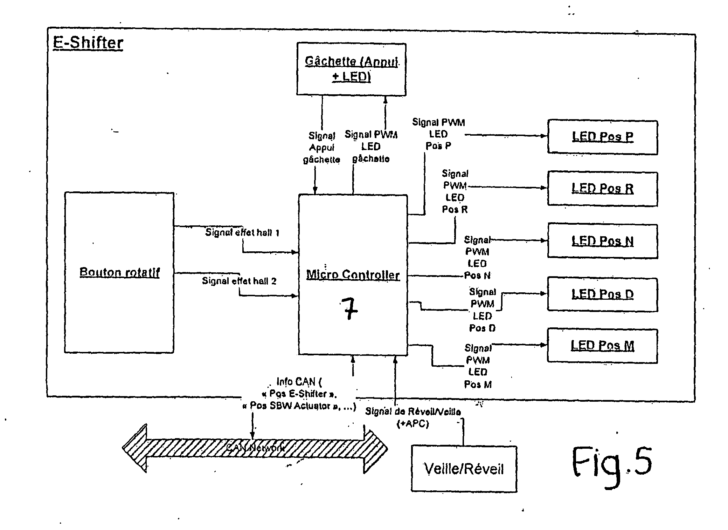

Comme le montre la figure 5, les signaux effet Hall du bouton rotatif (1) sont transmis à un microcontrôleur (7) qui envoie un signal à chacune des LED indiquant les différentes positions P - R - N - D et M. Le microcontrôleur est également assujetti à la gâchette de sélection du mode que présente le bouton.

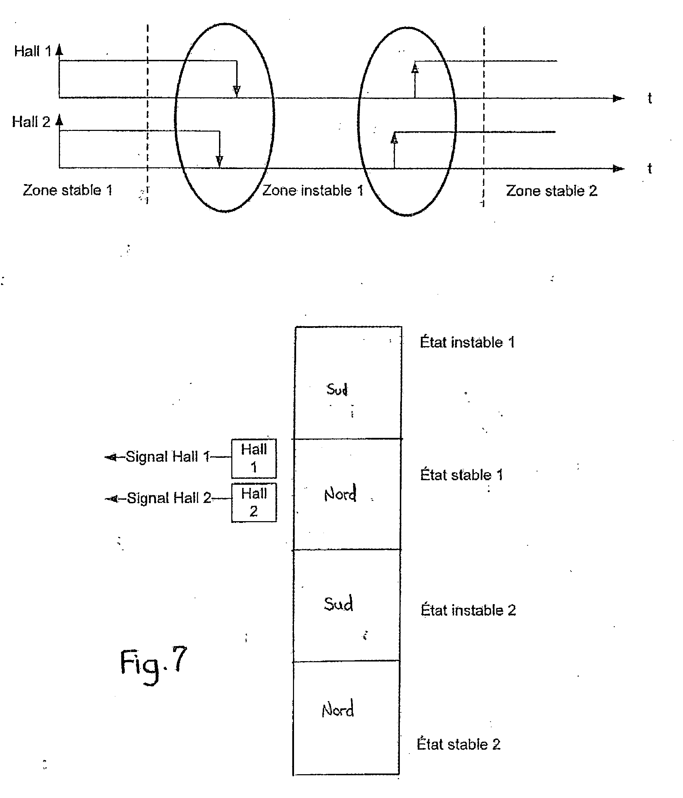

La fonction d'interface entre le bouton rotatif et le microcontrôleur, en combinaison avec les capteurs à effet Hall, permet de détecter le déplacement et le sens de déplacement dudit bouton d'une zone stable 1 vers une zone stable 2. Il ressort d'un chronogramme Fig. 7 des signaux des capteurs à effet Hall, que les fronts descendants permettent de détecter un début de mouvement de la position stable 1 vers la position stable 2, tandis que les fronts montants permettent de confirmer la fin du mouvement de la position stable 1 vers la position stable 2.

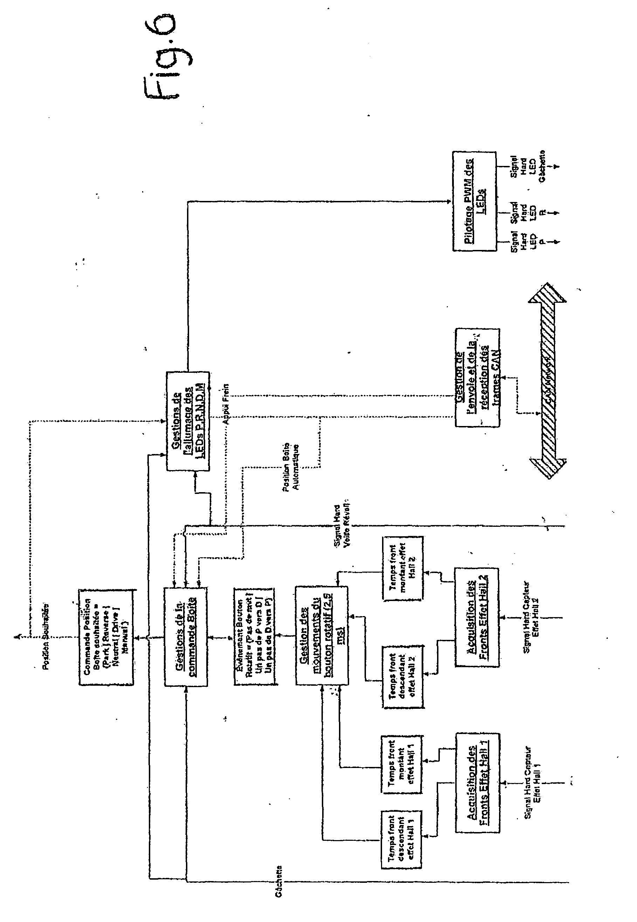

On renvoie à la décomposition fonctionnelle ci-après, afin de décrire les différentes fonctions, ainsi que les entrants / sortants de ces fonctions, en référence aux synoptiques de la figure 6.

| **Item** | **Nom** | **Description** | **Entrant(s)** | **Sortant(s)** |
|---|---|---|---|---|
| FP1.1 | **Acquisition des Fronts Effet Hall 1** | Acquisition et mémorisation dans temps pour chaque front montant et descendant pour le capteur à effet hall 1 | Signal Hard Capteur Effet Hall 1 | 1.Temps front descendant effet Hall 1 |
| | | | | 2.Temps front montant effet Hall 1 |
| FP1.2 | **Acquisition des Fronts Effet Hall 2** | Acquisition et mémorisation dans temps pour chaque front montant et descendant pour le capteur à effet hall 2 | Signal Hard Capteur Effet Hall 2 | 1.Temps front descendant effet Hall 2 |
| | | | | 2.Temps front montant effet Hall |
| FP1.3 | **Gestion des mouvement s du bouton rotatif (2,5 ms)** | Fonction de gestion des mouvements du bouton rotatif. Cette fonction surveille l'apparition d'un front montant sur les deux capteurs effets Hall. Dans ce cas cette fonction va tester : | 1.Temps front descendant effet Hall 1 | 1. Événement Bouton Rotatif = {Pas de mvt\| Un pas de P vers M (sens horaire) \| Un pas de M vers P (sens anti-horaire)} |
| | | | 2.Temps front montant effet Hall | |
| | | 1. le temps entre les deux fronts descendants est | 3.Temps front descendant effet descendant effet Hall 2 | |
| | | dans une plage temporelle admissible (entre 1 ms et 1s). Cette plage est liée à la cinématique de bouton rotatif. | 3.Temps front montant effet Hall 2 | |
| | | 2. le temps entre les deux fronts montants est dans une plage temporelle admissible (entre 1 ms et 1s). Cette plage est liée à la cinématique de bouton rotatif. | | |
| | | Puis cette fonction va calculer : | | |
| | | 3. le sens de déplacement (P vers M ou M vers P) par rapport aux fronts descendants | | |
| | | 4. le sens de déplacement (P vers M ou M vers P) par rapport aux fronts montants | | |
| | | Puis cette fonction va tester : | | |
| | | 5. la cohérence entre les deux sens de rotation trouvé | | |
| | | Enfin, cette fonction va mettre à jour la donnée « Événement Bouton rotatif » | | |
| | | | | |
| | | Il est à noter que la périodicité de traitement d'un mouvement rotatif est suffisamment élevée pour garantir le non perte d'un pas du mouvement rotatif. | | |
| FP1.4 | **Gestions de la commande Boite** | Cette fonction va permettre de mettre à jour l'information « Position souhaitée » L'algorithme de cette fonction est spécifié ci-dessous (voir FP1.4) | 1. Événement Bouton Rotatif = {Pas de mvt\| Un pas de P vers M (sens horaire) \| Un pas de M vers P (sens anti-horaire)} | 1. Commande Position Boîte souhaitée = {Park \| Reverse \| Neutral \| Drive \| Manual } |
| | | Il est à noter que la périodicité de traitement de la commande boîte est suffisamment élevée pour garantir le non perte d'une information Événement Bouton Rotatif à « Un pas de P vers M » ou « Un pas de M vers P ». | 2. État signal Veille / Réveil | 2. Événement Bouton Rotatif = {Pas de mvt \| Un pas de P vers M |
| | | | 3. Appui Gâchette | (sens horaire)\| |
| | | | 4. Appui Frein | Un pas de M |
| | | | 5. Position Boîte Automatique | vers P (sens anti-horaire)} |
| FP1.5 | **Gestions de l'allumage des LEDs P,R,N,D,M** | Cette fonction va gérer l'allumage des LEDs de position P, R, N, D et M ainsi que la LED de la gâchette. | 1. État signal Veille / Réveil | |
| | | | 2. Appui Gâchette | |
| | | | 3. Position Boîte Automatique | |
| | | Si le signal Veille/Réveil est inactif (demande de mise en veille) alors la séquence de pilotage des LEDS vers P est réalisée. Cette séquence permet d'allumer toutes les leds de la position actuelles vers la position finale souhaitée qui est P. | | |
| | | Si un mouvement demandant un appui gâchette est réalisé sans cet appui gâchette, alors la séquence de notification d'une mauvaise manipulation est réalisée (clignotement de la LED Gâchette). | | |
| | | Sinon la LED correspondant à la position boîte de vitesse est allumée et les autres LEDs sont dans un état allumage faible (type allumage nuit). | | |
| FP1.6 | **Gestion de l'envoi et de la réception des trames CAN** | Cette fonction va permettre de recevoir et d'émettre des signaux via le bus CAN. Attention, les signaux CAN sont très liés à l'architecture retenue : certains signaux CAN pourraient être remplacés par des signaux filaires et inversement. | 1. Appui frein | 1. Commande |
| | | | 2. Position Boîte Automatique | Position Boîte souhaitée = {Park \| Reverse \| Neutral \| Drive \| Manual } |
| FP1.7 | **Pilotage PWM des LEDs** | Cette fonction permet le pilotage des LEDs avec un rapport cyclique variable. | 1. Rapport cyclique LED P | 1. Signal Hard LED |
| | | | 2. Rapport cyclique LED R | 2. Signal Hard LED R |
| | | | 3. Rapport cyclique LED N | 3. Signal Hard LED N |
| | | | 4. Rapport cyclique LED D | 4. Signal Hard LED D |
| | | | 5. Rapport cyclique LED M | 5. Signal Hard LED M |
| | | | 6. Rapport cyclique Gâchette | 6. Signal Hard Gâchette |

Le fonctionnement du dispositif de commande de la boîte de vitesses au moyen d'un bouton multi-stable, peut être résumé comme suit :
- Au démarrage du véhicule, la boite de vitesses est en mode P. La LED correspondante est allumée.
- En tournant le bouton, on passe de la position P à la position R puis N, puis D, puis M. A chaque mouvement, les différentes LED indiquent un seul changement.
- A l'extinction du véhicule, les différentes LED s'allument, puis s'éteignent successivement depuis la position engagée jusqu'à l'extinction du P, et cela sans que le conducteur soit obligé d'intervenir sur le bouton. L'ordre « Commande Position Boite Souhaitée » sera P permettant ainsi d'avoir un retour en P automatique.

Comme indiqué, pour sortir des positions P, N et éventuellement M, ainsi que pour entrer en position N (option), il est nécessaire d'appuyer sur le contacteur (5) positionné sur le bouton (1) ou à proximité de ce dernier. L'appui sur ce contacteur n'est valable que pendant un temps déterminé. La validité de l'appui contacteur sera limitée à un temps déterminé sans changement de mode et sera désactivé dès qu'un nouveau mode sera selectionné.

Si l'opérateur tourne le bouton sans avoir appuyé sur le contacteur, alors que cet appui est nécessaire pour modifier la position, la boîte de vitesses ne change pas de mode et l'indication lumineuse ne change pas.

Si l'opérateur tourne le bouton pour entrer en position M, sans avoir exercer l'appui nécessaire sur le contacteur, la boîte passe ou reste en position D.

Lorsque l'appui sur le contacteur n'est pas effectué, alors que ce dernier est nécessaire, un signal sonore et/ou lumineux avertit le conducteur.

Les avantages ressortent bien de la description.

## Revendications

1. Dispositif de commande d'une boîte de vitesses de véhicule automobile assujettie à un calculateur avec, en mode de fonctionnement automatique de la boîte, les positions associées aux modes P, R, N et D et, en mode de fonctionnement manuel de la boîte, la position associée au mode M, comprenant un organe de passage et de sélection des différents modes, sous forme d'un bouton (1) apte à être entraîné librement en rotation, d'une manière continue, selon 360°, dans un sens ou dans l'autre, **caractérisé en ce que** ledit bouton est assujetti :
- à des moyens de type magnétique (3, 4) décalés angulairement selon des positions prédéterminées sur une partie du bouton et sur une partie d'un support (2), et aptes à exercer une force d'attraction créant un effet de billage faisant office de crans correspondant à une position d'indexation angulaire stable, ledit effet de billage étant annulé lors d'un effort exercé sur le bouton, chacune des positions stables correspondant aux différentes positions des différents modes P, R, N, D et M avec, pour chacune d'elles, un signal d'indication lumineuse sous forme de LED ;
- à des moyens sous forme de capteurs à effet Hall pour détecter le déplacement d'une position stable vers une autre position stable et indiquer le sens de rotation ;
- à un élément (5) faisant office de contacteur pour passer d'un mode à l'autre ;
- à un calculateur d'acquisition des données en provenance de la boîte de vitesses ;
- à un calculateur de gestion de la boîte de vitesses pour la sélection et la gestion des modes P, R, N, D et M en combinaison avec un actionneur ;
- à un microcontrôleur auquel sont transmis les signaux des capteurs à effet Hall et qui envoie un signal à chacune des LED correspondant aux différentes positions des différents modes, ledit microcontrôleur étant aussi assujetti à l'élément (5) faisant office de contacteur pour notifier au calculateur de gestion le pilotage des modes P, R, N, D et M selon la position sélectionnée par le conducteur.

2. Dispositif selon la revendication 1, **caractérisé en ce que** les moyens de type magnétique sont constitués par une série d'aimants (3,4) dont les pôles Nord et les pôles Sud sont disposés en alternance sur la partie correspondante du bouton et du support.

3. Dispositif selon l'une des revendications 1 à 2, **caractérisé en ce que** la partie du bouton est constituée par une couronne interne (1a), tandis que la partie du support est constituée par une couronne externe (2a), lesdites couronnes étant disposées d'une manière concentrique.

4. Dispositif selon les revendications 2 et 3, **caractérisé en ce que** les aimants sont répartis sur la périphérie des couronnes.

5. Dispositif selon la revendication 2, **caractérisé en ce que** les capteurs à effet Hall (6) sont montés à proximité des aimants de la partie tournante du bouton (1).

## Claims

1. Device to control a motor vehicle gearbox subject to a computer with, in automatic operation mode of the gearbox, the positions associated with P, R, N and D and, in manual operation mode of the gearbox, the position associated with mode M, comprising an organ for passing through and selecting the different modes, in the form of a button (1) capable of being freely rotated, **characterised in that** the button (1) is rotated, constantly, around 360°, in one direction or the other, **characterised in that** the button is subject to:
- means of a magnetic type (3, 4) staggered angularly according to pre-set positions on one part of the button and on one part of a support (2), and capable of exerting an attraction force creating an effect similar to the engagement of a ball in indentations acting as notches corresponding to a stable angular indexation position, the said engagement effect being cancelled out when a force is exerted on the button, each of the stable positions corresponding to the different positions of the different modes P, R, N, D and M with, for each of them, a luminous indication signal in the form of a LED;
- means in the form of Hall effect sensors to detect the movement from one stable position to another stable position and indicate the direction of rotation;
- an element (5) used as a contactor to pass from one mode to the other;
- a computer to acquire data from the gearbox;
- a computer to control the gearbox to select and manage modes P, R, N, D and M in combination with an actuator;
- a microcontroller to which the signals of the Hall effect sensors are sent and which sends a signal to each of the LEDs corresponding to the different positions of the different modes, the said microcontroller being also subject to the element (5) used as a contactor to notify the control computer of the setting of modes P, R, N, D and M depending on the position selected by the driver.

2. Device according to claim 1, **characterised in that** the means of magnetic type are formed by a series of magnets (3,4) the North poles and South poles of which are arranged alternately on the corresponding part of the button and of the support.

3. Device according to one of claims 1 to 2, **characterised in that** the part of the button is formed by an inner crown (1 a), whereas the part of the support is formed by an outer crown (2a), the said crowns being arranged concentrically.

4. Device according to one of claims 2 and 3, **characterised in that** the magnets are distributed around the periphery of the crowns.

5. Device according to claim 2, **characterised in that** the Hall effect sensors (6) are mounted near the magnets of the rotating part of the button (1).

## Patentansprüche

1. Schaltvorrichtung eines von einem Rechner abhängigen Automobilgetriebes, im Automatikbetrieb der Schaltung mit den Positionen für die Betriebsarten P, R, N und D und im manuellen Betrieb der Schaltung mit der Position für die Betriebsart M, mit einem Organ für die Schaltung und Auswahl der verschiedenen Betriebsarten in Form eines frei drehbaren Schaltknopfes (1), der kontinuierlich über 360° in die eine oder andere Richtung mitgeführt werden kann, **dadurch gekennzeichnet, dass** der Schaltknopf abhängig ist von:
- magnetartigen Einrichtungen (3 und 4), die in vorgegebenen Positionen auf einem Teil des Knopfes und auf einem Teil einer Halterung (2) winkelig versetzt und geeignet sind, eine Anziehungskraft auszuüben und dabei - entsprechend einer stabilen winkeligen Indexposition - einen Raststufeneffekt vergleichbar mit einer Kugelrastung zu erzeugen, wobei der besagte Kugelrasteffekt bei einer Kraftausübung auf den Knopf annulliert wird und jede der stabilen Positionen den einzelnen Positionen der verschiedenen Betriebsarten P, R, N, D und M entspricht, jeweils mit einer Leuchtanzeige in Form einer LED;
- Einrichtungen in Form von Hall-Effekt-Sensoren zur Erkennung der Verschiebung von einer stabilen Position zu einer anderen stabilen Position und zur Anzeige der Drehrichtung;
- einem als Schalter dienenden Element (5) zum Wechsel von einer Betriebsart zur anderen;
- einem Rechner für die Erfassung der vom Getriebe stammenden Daten;
- einem Rechner für das Getriebemanagement zur Wahl und Steuerung der Betriebsarten P, R, N, D und M in Verbindung mit einem Aktuator;
- einem Mikrocontroller, dem die Signale der Hall-Effekt-Sensoren gemeldet werden und der jeder den verschiedenen Positionen der einzelnen Betriebsarten entsprechenden LED ein Signal zuschickt, wobei der besagte Mikrocontroller auch von dem als Schalter dienenden Element (5) abhängig ist, um je nach der vom Fahrer gewählten Position dem Rechner für das Getriebemanagement die Steuerung der Betriebsarten P, R, N, D und M zu übermitteln.

2. Vorrichtung nach Anspruch 1, **dadurch gekennzeichnet, dass** die magnetartigen Einrichtungen aus einer Reihe von Magneten (3, 4) bestehen, deren Nord- und Südpole auf dem entsprechenden Teil des Knopfes und der Halterung alternierend angeordnet sind.

3. Vorrichtung nach einem der Ansprüche 1 und 2, **dadurch gekennzeichnet, dass** der Knopfteil aus einem inneren Kranz (1a) besteht, während der Halterungsteil aus einem äußeren Kranz (2a) besteht, wobei die besagten Kränze konzentrisch angeordnet sind.

4. Vorrichtung nach einem der Ansprüche 2 und 3, **dadurch gekennzeichnet, dass** die Magneten über den Rand der Kränze verteilt sind.

5. Vorrichtung nach Anspruch 2, **dadurch kennzeichnet, dass** die Hall-Effekt-Sensoren (6) in der Nähe der Magneten des Drehteils des Knopfes (1) angebracht sind.
